# EUROPÄISCHE PATENTANMELDUNG

(11) **EP 3 836 336 A1**
(43) Veröffentlichungstag der Anmeldung: **16.06.2021**
(21) Anmeldenummer: 20204579.5
(22) Anmeldetag: 29.10.2020
(51) Int. Cl.: H02J 3/38, F03D 7/02, F03D 7/04

(54) **VORRICHTUNG UND VERFAHREN ZUR WINKELSTABILISIERUNG EINER VIRTUELLEN SYNCHRONMASCHINE**

(30) Priorität: 10.12.2019 DE 102019133813
(71) Anmelder: Wobben Properties GmbH, 26607 Aurich (DE)
(72) Erfinder: ROSSO, Roberto, 26605 Aurich (DE); ENGELKEN, Sönke, 28215 Bremen (DE); LISERRE, Marco, 24143 Kiel (DE)
(74) Vertreter: Eisenführ Speiser

(57) **Zusammenfassung**

Die vorliegende Erfindung betrifft ein Steuermodul eines Umrichters, insbesondere eines Leistungsumrichters einer Windenergieanlage, das dazu eingerichtet ist, den Umrichter (200) so anzusteuern, dass der Umrichter ein Verhalten einer Synchronmaschine emuliert, wenigstens umfassend: ein Leistungsmodul zum Berechnen einer Leistungsänderung in Abhängigkeit einer erfassen Leistung und ein Korrekturmodul zum Einstellen eines Leistungssollwertes, insbesondere für den Umrichter, in Abhängigkeit der berechneten Leistungsänderung.

## Beschreibung

Die vorliegende Erfindung betrifft ein Steuermodul eines Umrichters, insbesondere eines Leistungsumrichters einer Windenergieanlage, das dazu eingerichtet ist, den Umrichter so anzusteuern, dass der Umrichter ein Verhalten einer Synchronmaschine emuliert.

Ferner betrifft die vorliegende Erfindung eine, ein solches Steuermodul aufweisende Steuereinheit, ein, ein solches Steuermodul aufweisenden Umrichter sowie ein Verfahren zum Steuern desselbigen und eine, ein solches Steuermodul aufweisende und/oder ein solches Verfahren ausführende Windenergieanlage.

Durch die zunehmende Verdrängung konventioneller, synchrongeneratorgetriebener Kraftwerke durch regenerative, umrichterbasierte Erzeuger, verlieren klassische Synchrongenerator immer mehr an Einfluss innerhalb des elektrischen Versorgungsnetzes.

Durch diesen Rückgang an Synchrongeneratoren kommt es ebenfalls zu einer Abnahme der konventionellen, das elektrische Versorgungsnetz stabilisierenden Schwungmassen.

Da die Auswirkungen einer solchen Änderung innerhalb des elektrischen Versorgungsnetzes nahezu unerforscht sind, gibt es Überlegungen die Umrichter der regenerativen Erzeuger so zu betreiben, dass sie am elektrischen Versorgungsnetz wie eine Synchronmaschine wirken. Mit anderen Worten sollen die Umrichter das Verhalten einer Synchronmaschine emulieren, ohne dabei die Vorzüge der Stromrichtertechnik zu verlieren. Solche so betriebenen Umrichter werden auch als virtuelle Synchronmaschine bezeichnet.

In den letzten Jahren wurden hierzu verschiedenste Regelverfahren für Synchronmaschinenemulationen vorgeschlagen.

Einige dieser Verfahren, wie bspw. in R. Rosso, J. Cassoli, G. Buticchi, S. Engelken, and M. Liserre, "Robust stability analysis of LCL filter based synchronverter under different grid conditions," IEEE Trans. Power Electron., 2018, doi: 10.11 09/TPEL.2018.2867040 gezeigt, weisen sogar Vorteile gegenüber Standard etablierten Umrichterregelverfahren auf, insbesondere an sogenannten schwachen Netzen.

Nachteilig an den bisher bekannten Verfahren zum Emulieren einer Synchronmaschine mittels eines Umrichters ist, dass diese nicht für etwaige, im elektrischen Versorgungsnetz auftretende Netzfehler ausgelegt sind.

Das Deutsche Patent- und Markenamt hat in der Prioritätsanmeldung zur vorliegenden Anmeldung folgenden Stand der Technik recherchiert: EP 3 208 907 B1, CN 110 429 659 A, AT 518 194 A1 und Artikel von R. Rosso et al.: "Robust Stability Analysis of LCL Filter Based Synchronverter Under Different Grid Conditions".

Aufgabe der vorliegenden Erfindung ist es daher, zumindest eines der oben genannten Probleme zu adressieren, insbesondere soll eine Regelverfahren zur Beherrschung von Netzfehlern für virtuelle Synchronmaschinen vorgeschlagen werden, bevorzugt um die Eigenschaften einer realen Synchronmaschine auch unter einem Netzfehler und den Randbedingungen der Hardwareeigenschaften des Umrichters weiterhin reproduzieren zu können. Insbesondere soll ein Verfahren vorgeschlagen werden, welches einen kritischen Zustand in Bezug auf die Winkelstabilität erkennt und erlaubt passende Maßnahmen zu treffen.

Erfindungsgemäß wird somit ein Steuermodul eines Umrichters, insbesondere eines Leistungsumrichters einer Windenergieanlage vorgeschlagen, das dazu eingerichtet ist, den Umrichter so anzusteuern, dass der Umrichter ein Verhalten einer Synchronmaschine emuliert, wenigstens umfassend: ein Leistungsmodul zum Berechnen einer Leistungsänderung in Abhängigkeit einer erfassten Leistung und ein Korrekturmodul zum Einstellen eines Leistungssollwertes, insbesondere für den Umrichter, in Abhängigkeit der berechneten Leistungsänderung.

Das Steuermodul ist insbesondere mittels des Leistungsmoduls und des Korrekturmoduls dazu eingerichtet, einen möglichen Verlust einer Winkelstabilität des Umrichters in Bezug auf das elektrische Versorgungsnetz zu erkennen.

Der Umrichter ist bspw. ein Umrichter einer Windenergieanlage oder eine Photovoltaikanlage. Bevorzugt ist der Umrichter ein Leistungsumrichter, also ein Umrichter der dazu eingerichtet und verwendet wird, elektrische Leistung in das elektrische Versorgungsnetz einzuspeisen. Bevorzugt weist der Umrichter hierfür wenigstens eine Zwischenkreisgleichspannung von wenigstens 400V, weiter bevorzugt von wenigstens 690V, insbesondere von wenigstens 1000V auf.

Der Umrichter ist also bevorzugt als Leistungsumrichter einer Windenergieanlage ausgebildet.

Der Umrichter selbst wird bevorzugt über eine Steuereinheit angesteuert, die das vorstehend oder nachstehend beschriebene Steuermodul umfasst und/oder wird wie nachstehend beschrieben angesteuert.

Das Steuermodul selbst weist also wenigstens ein Leistungsmodul und ein Korrekturmodul auf.

Das Leistungsmodul ist dazu eingerichtet eine Leistungsänderung in Abhängigkeit einer erfassten Leistung zu berechnen. Bevorzugt ist die erfasste Leistung, die elektrische Leistung, die von dem Umrichter, insbesondere an das elektrische Versorgungsnetz, abgegeben wird. Die von dem Umrichter abgegebene Leistung kann bspw. mittels einer Leistungserfassung am Ausgang des Umrichters erfasst oder ermittelt werden. Die Leistungserfassung selbst kann hierfür bspw. Bestandteil der Steuereinheit des Umrichters oder des Steuermoduls sein.

Die Leistungsänderung kann ferner bspw. mittels mehrerer Messung über der Zeit ermittelt werden, also bspw. eine erste Messung zu einem ersten Zeitpunkt und eine zweite Messung zu einem zweiten Zeitpunkt. Aus diesen beiden, so erfassten Werten kann dann eine Differenz gebildet werden, die die Leistungsänderung angibt.

Bevorzugt wird die Leistungsänderung mittels einer diskreten Implementierung der Ableitung von der gemessenen bzw. erfassten Leistung bestimmt, bevorzugt unter Verwendung einer kaskadierten diskreten Filterung.

Alternativ wird die Leistungsänderung mittels eines Beobachters bestimmt, der bspw. durch einen PI-Regler auf die Differenz zwischen gemessener Leistung und einer geschätzten Leistung agiert.

Das Korrekturmodul ist ferner dazu eingerichtet, einen Leistungssollwert einzustellen bzw. einen Leistungssollwert auszugeben, insbesondere um den Leistungssollwert für den Umrichter einzustellen. Der Leistungssollwert bzw. Korrekturwert für den Leistungssollwert wird dabei in Abhängigkeit der berechneten Leistungsänderung ermittelt.

Bevorzugt weist das Korrekturmodul zudem einen Grenzwert auf und erstellt nur dann einen Leistungssollwert für den Umrichter, wenn die Leistungsänderung einen vorbestimmten Grenzwert überschritten hat.

Das Korrekturmodul kann zudem weitere Untermodule aufweisen und/oder es sind weitere Module vorgesehen, die dazu eingerichtet sind, einen Leistungssollwert zu ändern und/oder vorzugeben, bspw. mittels eines proportionalen Faktors oder einer Begrenzung auf einen festen Wert.

Es wurde nämlich erkannt, dass wenn die Leistungsänderung einen bestimmten Betrag überschreitet, insbesondere negativ ist, also dP/dt<0 ist, eine Winkelinstabilität vorliegen kann. Um das Vorliegen einer Winkelinstabilität zu verifizieren, wird bevorzugt zudem auf die Beschleunigung des virtuellen Polrads abgestellt, insbesondere wenn diese Beschleunigung positiv ist, also dδ/dt > 0 ist, ist eine Winkelinstabilität bzw. ein drohender Stabilitätsverlust anzunehmen. Insbesondere, wenn das Produkt aus diesen beiden Faktoren eine bestimmte Grenze über- bzw. unterschreitet, könnte eine Winkelinstabilität vorliegen. In einem solchen Fall greift das Korrekturmodul also in die Regelung des Umrichters ein, um einen neuen Leistungssollwert, insbesondere einen stabileren Leistungssollwert, für den Umrichter vorzugeben.

Es wird also auch vorgeschlagen, dass das Steuermodul erst ab bestimmten Leistungsänderungen in die Regelung des Umrichters eingreift, insbesondere über das Korrekturmodul.

Vorzugsweise umfasst das Steuermodul ferner ein Leistungswinkelmodul zum Berechnen einer Leistungswinkeländerung in Abhängigkeit wenigstens einer erfassten Frequenz, wobei der Leistungssollwert auch in Abhängigkeit der Leistungswinkeländerung eingestellt wird.

Das Steuermodul weist somit ferner auch ein Leistungswinkelmodul auf.

Das Leistungswinkelmodul ist dabei dazu eingerichtet, eine Leistungswinkeländerung in Abhängigkeit wenigstens einer erfassten Frequenz zu ermitteln.

Die erfasste Frequenz kann bspw. eine mechanische oder eine elektrische Frequenz sein. Bevorzugt werden wenigstens eine Frequenz der virtuellen Synchronmaschine und die Frequenz des elektrischen Versorgungsnetzes erfasst.

Die Leistungswinkeländerung wird also, genau wie die Leistungsänderung, dazu verwendet, den Leistungssollwert für den Umrichter zu bestimmen.

Bevorzugt werden hierfür die Leistungsänderung dP/dt und die Leistungswinkeländerung dδ/dt miteinander multipliziert.

Es wird also insbesondere vorgeschlagen, dass ein Koeffizient berechnet wird, der dasselbe Vorzeichen wie der synchronizing power coefficient hat. Dies ist darauf zurückzuführen, dass das Vorzeichen des synchronizing power coefficient an sich schon ein Indikator einer möglichen Winkelinstabilität ist. Die vorgeschlagene Lösung hat also den Vorteil, dass eine Division durch Null vermieden werden kann. Hervorzuheben ist hier auch die Tatsache, dass der Faktor dδ/dt durch einen Sättigungsblock von [0, +∞] begrenzt wird, damit die Situation dP/dt>0 und dδ/dt<0 (deren Produkt auch ein negatives Vorzeichen hat) nicht als kritischer Zustand erkannt wird.

Vorzugsweise umfasst das Steuermodul ferner eine Multiplikation mittels derer die Leistungsänderung und die Leistungswinkeländerung zu einem Produkt bzw. Faktor zusammengefasst werden, wobei der Leistungssollwert auch in Abhängigkeit des Faktors eingestellt wird.

Die Leistungsänderung und die Leistungswinkeländerung werden somit zu einem Produkt multipliziert, welches als Faktor verwendet wird, insbesondere um den Leistungssollwert für den Umrichter einzustellen.

Es wird also insbesondere vorgeschlagen, mittels einer Multiplikation einen Faktor zu generieren, der indikativ für die Winkelstabilität ist bzw. einen drohenden Verlust der Winkelstabilität anzeigt.

In Abhängigkeit dieses Faktors wird dann bevorzugt der Leistungssollwert, insbesondere des Umrichters, eingestellt.

Sofern eine solche Multiplikation verwendet wird, die die Leistungswinkeländerung mit der Leistungsänderung multipliziert, wird ebenfalls vorgeschlagen, dass das Korrekturmodul einen entsprechenden Grenzwert für dieses Produkt aufweist bzw. umfasst.

Vorzugsweise weist das Leistungsmodul wenigstens eine diskrete Implementierung einer Ableitung der erfassten Leistung auf.

Dies bedeutet insbesondere, dass das Leistungsmodul dazu eingerichtet ist, die Leistungsänderung nach der Zeit zu bestimmen, also insbesondere als Differential dP/dt.

Vorzugsweise weist das Leistungsmodul hierfür wenigstens eine diskrete Filterung auf, die der diskreten Implementierung der Ableitung der erfassten Leistung nachgelagert ist, um die die Leistungsänderung zu ermitteln.

Es wird also zum Ermitteln der Leistungsänderung insbesondere auch eine diskrete Implementierung der Ableitung der gemessenen Leistung vorgeschlagen, die mit einer zusätzlichen kaskadierten diskreten Filterung arbeitet.

Alternativ weist das Leistungsmodul wenigstens einen Beobachter auf, der die Leistungsänderung dP/dt ermittelt.

Dies kann bspw. durch einen PI-Regler erfolgen, der auf die Differenz zwischen einer gemessenen bzw. erfassten Leistung und einer geschätzten Leistung agiert, und dadurch eine Zustandsvariabel dP_{dt} berechnet.

Vorzugsweise agiert der Beobachter durch einen PI-Regler auf eine Differenz zwischen der erfassten Leistung und einer, insbesondere durch den Beobachter, geschätzten Leistung.

Vorzugsweise weist das Leistungswinkelmodul wenigstens eine Summation auf, die dazu eingerichtet ist, wenigstens eine erste elektrische Frequenz mit einer zweiten elektrischen Frequenz abzugleichen.

Bevorzugt bildet die Summation eine Differenz aus der elektrischen Frequenz der virtuellen Synchronmaschine und der elektrischen Frequenz des elektrischen Versorgungsnetzes.

Es wird also insbesondere vorgeschlagen sowohl die elektrische Frequenz der virtuellen Synchronmaschine also auch die elektrische Frequenz des elektrischen Versorgungsnetzes zu berücksichtigen, insbesondere um eine Frequenzdifferenz zu berechnen, nämlich elektrische Frequenz der virtuellen Synchronmaschine minus elektrische Frequenz des elektrischen Versorgungsnetzes.

Vorzugsweise weist das Leistungswinkelmodul wenigstens einen Begrenzer aufweist, der dazu eingerichtet ist, die Frequenzdifferenz auf positive Werte zu begrenzen.

Es wird also insbesondere vorgeschlagen nur positive Werte in Bezug auf die Leistungswinkeländerung zu betrachten.

Hierfür wird die Leistungswinkeländerung über einen Sättigungsblock geführt bzw. auf ausschließlich positive Werte begrenzt.

Sofern also negative Werte anliegen, wird durch den Begrenzer bzw. Sättigungsblock eine Null ausgegeben, die dazu führt, dass das Produkt aus Leistungswinkeländerung und Leistungsänderung ebenfalls Null wird, wodurch der Grenzwert des Korrekturmoduls nicht überschritten wird und somit die Sollwerte nicht geändert werden, insbesondere, weil ein stabiler Betrieb vorliegt.

Es wird also insbesondere auch vorgeschlagen, dass nur die Situationen als kritischer Zustand identifiziert werden, wo der Leistungswinkel δ beschleunigt und die Leistung P absinkt.

Vorzugsweise ist das Korrekturmodul dazu eingerichtet ist, den Leistungssollwert erst dann einzustellen, wenn ein vorbestimmter Grenzwert überschritten ist, insbesondere, wenn der Faktor den vorbestimmten Grenzwert überschreitet.

Es wird insbesondere also auch vorgeschlagen, dass das Steuermodul erst in die Regelung des Umrichters eingreift, wenn eine Winkelinstabilität droht.

Bevorzugt liegt eine Winkelinstabilität immer dann vor, wenn der Winkel beschleunigt, also die Winkeländerung positiv ist, und die Leistung absinkt, also die Leistungsänderung negativ ist.

Sobald ein kritischer Zustand erkannt wird, beträgt die vorgeschlagene Maßnahme die Anpassung der Leistungssollwerte, insbesondere des Umrichters, auf einen niedrigeren Wert. Diese Änderung verursacht bevorzugt eine Reduzierung des Leistungswinkels δ und vermeidet den instabilen Betrieb des Umrichters.

Erfindungsgemäß wird ferner eine Steuereinheit eines Umrichters vorgeschlagen, insbesondere eines Leistungsumrichters einer Windenergieanlage, umfassend ein vorstehend oder nachstehend beschriebenes Steuermodul.

Die Steuereinheit ist dabei insbesondere dazu eingerichtet, Stromsollwerte zu erzeugen, mittels derer der Umrichter angesteuert wird, bspw. mittels eines Toleranzbandverfahrens.

Erfindungsgemäß wird ferner ein Verfahren zum Steuern eines Umrichters vorgeschlagen, insbesondere eines Leistungsumrichters einer Windenergieanlage, wobei der Umrichter dazu eingerichtet ist, das Verhalten einer Synchronmaschine zu emulieren, umfassend die Schritte: Erfassen einer Leistung am Ausgang des Umrichters, Berechnen einer Leistungsänderung in Abhängigkeit der erfassten Leistung und Einstellen eines Leistungssollwertes, insbesondere für den Umrichter, in Abhängigkeit der berechneten Leistungsänderung.

Das Verfahren sieht also insbesondere vor, einen Umrichter, der dazu eingerichtet ist, das Verhalten einer Synchronmaschine zu emulieren, in Abhängigkeit einer berechneten Leistungsänderung anzusteuern.

Das Verfahren wird dabei insbesondere zusätzlich zur Ansteuerung verwendet und dient insbesondere dazu, die Leistungsabgabe des Umrichters in kritischen Fällen, also insbesondere wenn der Verlust der Winkelstabilität droht, zu reduzieren.

Vorzugsweise umfasst das Verfahren ferner den Schritt: Berechnen einer Leistungswinkeländerung in Abhängigkeit wenigstens einer erfassten Frequenz, wobei der Leistungssollwert auch in Abhängigkeit der Leistungswinkeländerung eingestellt wird.

Vorzugsweise umfasst das Verfahren ferner den Schritt: Multiplizieren der Leistungsänderung und der Leistungswinkeländerung zu einem Faktor bzw. Produkt, wobei der Leistungssollwert auch in Abhängigkeit des Faktors eingestellt wird.

Es wird also insbesondere auch vorgeschlagen, dass sowohl die Leistungsänderung als auch Leistungswinkeländerung zur Steuerung des Umrichters herangezogen werden.

Vorzugsweise wird die Leistungswinkeländerung wenigstens durch einen Abgleich einer ersten elektrischen Frequenz mit einer zweiten elektrischen Frequenz bestimmt wird.

Dies erfolgt insbesondere wie vorstehend oder nachstehend beschrieben.

Erfindungsgemäß wird ferner ein Umrichter vorgeschlagen, insbesondere ein Leistungsumrichter einer Windenergieanlage, umfassend wenigstens eine Steuereinheit, insbesondere umfassend ein vorstehend oder nachstehend beschriebenes Steuermodul, wobei die Steuereinheit dazu eingerichtet ist, den Umrichter so anzusteuern, dass der Umrichter wenigstens ein Verhalten einer Synchronmaschine emuliert und/oder ein vorstehend oder nachstehend beschriebenes Verfahren ausführt.

Vorzugsweise umfasst der Umrichter eine Steuereinheit einer virtuellen Synchronmaschine, insbesondere wie vorstehend oder nachstehend beschrieben.

Erfindungsgemäß wird ferner eine Windenergieanlage vorgeschlagen, umfassend ein vorstehend oder nachstehend beschriebenes Steuermodul und/oder eine vorstehend oder nachstehend beschriebene Steuereinheit und/oder einen vorstehend oder nachstehend beschriebenen Umrichter und/oder eine Steuereinheit eines Umrichters, die dazu eingerichtet ist, ein vorstehend oder nachstehend beschriebenes Verfahren auszuführen.

Die vorliegende Erfindung wird nun nachfolgend exemplarisch anhand von Ausführungsbeispielen unter Bezugnahme auf die begleitenden Figuren näher erläutert, wobei fürgleich oder ähnliche Baugruppen dieselben Bezugszeichen verwendet werden.
- Fig. 1: zeigt eine schematische Ansicht einer Windenergieanlage gemäß einer Ausführungsform.
- Fig. 1A: zeigt schematisch die Steuereinheit einer virtuellen Synchronmaschine.
- Fig. 2: zeigt ein Steuermodul eines Umrichters in einer Ausführungsform.
- Fig. 3: zeigt ein Steuermodul eines Umrichters in einer bevorzugten Ausführungsform.
- Fig. 4: zeigt ein Steuermodul eines Umrichters in einer besonders bevorzugten Ausführungsform.
- Fig. 5: zeigt ein Leistungsmodul eines Steuermoduls in einer bevorzugten Ausführungsform.
- Fig. 6: zeigt ein Leistungsmodul eines Steuermoduls einer weiteren, bevorzugten Ausführungsform.

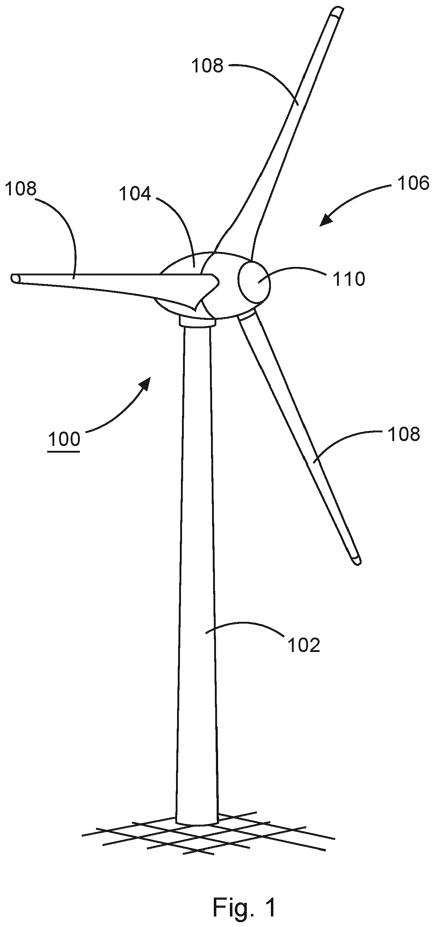

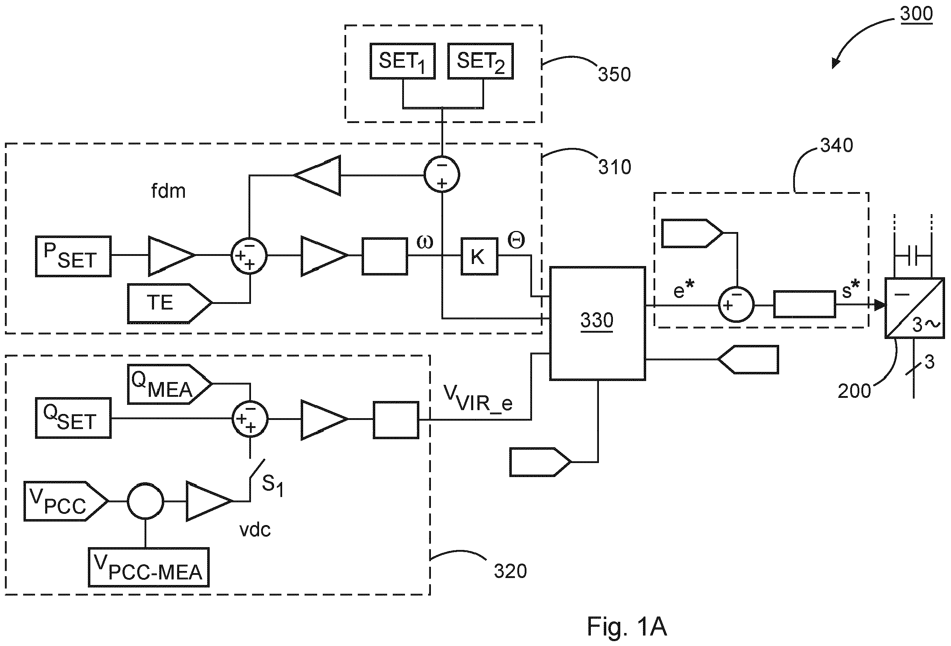

Fig. 1 zeigt eine schematische Ansicht einer Windenergieanlage 100 gemäß einer Ausführungsform.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Der Generator ist mittels eines Umrichters an ein elektrisches Netz, bspw. ein Windparknetz oder ein elektrisches Versorgungsnetz, angeschlossen, um einen dreiphasigen Wechselstrom einzuspeisen.

Die Windenergieanlage umfasst hierfür ein vorstehend oder nachstehend beschriebenes Steuermodul und/oder eine vorstehend oder nachstehend beschriebene Steuereinheit und/oder einen vorstehend oder nachstehend beschriebenen Umrichter und/oder eine Steuereinheit eines Umrichters, die dazu eingerichtet ist, ein vorstehend oder nachstehend beschriebenes Verfahren auszuführen.

Fig. 1A zeigt schematisch die Steuereinheit 300 einer virtuellen Synchronmaschine.

Mittels dieser Steuereinheit 300 kann der Umrichter 200 der Windenergieanlage 100, wie bspw. in Figur 1 gezeigt, so angesteuert werden, dass der Umrichter 200 das Verhalten einer Synchronmaschine emuliert.

Die Steuereinheit 300 umfasst hierfür eine Wirkleistungsregelung 310, eine Blindleistungsregelung 320, eine Recheneinheit 330, eine Stromregelung 340 und eine Sollwertvorgabe 350.

Der Wirkleistungsregelung 310 ist dazu eingerichtet, aus einem Wirkleistungssollwert P_set, insbesondere für den Umrichter, der bspw. durch eine Windenergieanlagensteuerung vorgegeben wird, eine Winkelgeschwindigkeit ω und daraus einen internen Referenzwinkel θ zu berechnen.

Hierzu wird zunächst der Wirkleistungssollwert P_set mit einem Generatoristdrehmoment T_e verrechnet und daraus unter zur Hilfenahme eines frequency droop mechanism fdm eine Winkelgeschwindigkeit ω ermittelt.

Aus der Winkelgeschwindigkeit ω wird dann unter Verwendung einer Verstärkung k der interne Referenzwinkel θ für die virtuelle Synchronmaschine ermittelt.

Der interne Referenzwinkel θ dient dann als Eingangsgröße für die Recheneinheit 330.

Der Blindleistungsregelung 320 ist dazu eingerichtet, aus einem Blindleistungssollwert Q_set, insbesondere für den Umrichter, der bspw. durch eine Windenergieanlagensteuerung vorgegeben wird und einer erfassten Blindleistung Q_mea eine virtuelle Erregerspannung v_vir_e zu berechnen, die als Eingangsgröße für die Recheneinheit 330 dient.

Zudem ist innerhalb der Blindleistungsregelung eine Spannungsregelung vdc vorgesehen, die eine, am Umrichterausgang erfasste Spannung V_PCC_mea mit einer Spannungssollvorgabe V_PCC abgleicht, und mittels des Schalters S1 zugeschaltet werden kann.

Die Recheneinheit 330 ist ferner dazu eingerichtet, aus einer bzw. der virtuellen Erregerspannung v_vir_e, insbesondere der Blindleistungsregelung 320, einer bzw. der Winkelgeschwindkeit ω und einem bzw. dem internen Referenzwinkel θ, eine virtuelle Polradspannung e* zu berechnen.

Aus dieser virtuellen Polradspannung e* werden dann mittels der Stromreglung 340 Stromsollwerte S* für den Umrichter berechnet, bspw. für ein Toleranzbandverfahren mittels dem der Umrichter 200 angesteuert wird.

In weiteren Ausführungsformen können zudem weitere Sollwertvorgaben Set_1, Set_2 vorgesehen sein, um den Betrieb der virtuellen Synchronmaschine weiter zu optimieren.

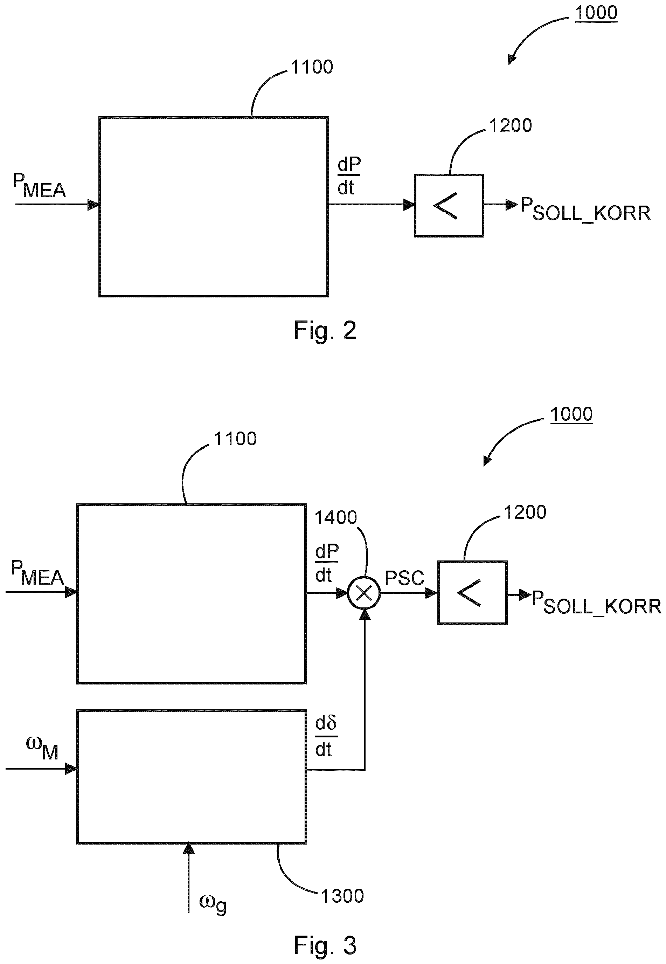

Fig. 2 zeigt ein Steuermodul 1000 eines Umrichters in einer Ausführungsform.

Das Steuermodul 1000 ist insbesondere dazu eingerichtet, einen Umrichter so anzusteuern, dass der Umrichter das Verhalten einer Synchronmaschine emuliert.

Hierzu umfasst das Steuermodul ein Leistungsmodul 1100 und ein Korrekturmodul 1200.

Das Leistungsmodul 1100 weist als Eingangsgröße eine, insbesondere am Umrichterausgang, erfasste Leistung, insbesondere Wirkleistung P_mea auf.

Hieraus berechnet das Leistungsmodul, wie vorstehend oder nachstehend beschrieben, eine Leistungsänderung dP/dt, insbesondere in Abhängigkeit der erfassten Leistung P_mea.

Die so berechnete Leistungsänderung dP/dt wird dem Korrekturmodul 1200 zugeführt.

Das Korrekturmodul 1200 berechnet bspw. aus der Leistungsänderung dP/dt einen Leistungssollwert P_soll_korr oder direkt den Leistungssollwert P_soll für den Umrichter, wenn bspw. die Leistungsänderung dP/dt einen vorbestimmten Grenzwert überschreitet.

Das Steuermodul 1000 greift also bevorzugt nur dann in die Steuerung des Umrichters, wie bspw. in Fig. 1A, ein, wenn ein vorbestimmter Grenzwert überschritten wird, der einen Verlust der Winkelstabilität indiziert.

In solchen Fällen wird dann vorgeschlagen, einen kleineren Leistungssollwert P_soll anzusteuern bzw. mittels des Korrekturmoduls, insbesondere dem Korrekturwert für den Leistungssollwert P_soll_korr einzustellen.

Es wird also insbesondere auch vorgeschlagen, bei einem auftretenden Verlust der Winkelstabilität die Leistungsabgabe des Umrichters zu verringern.

Fig. 3 zeigt ein Steuermodul 1000 eines Umrichters, insbesondere wie in Figur 2 gezeigt, in einer bevorzugten Ausführungsform.

Das Steuermodul 1000 weist zusätzlich ein Leistungswinkelmodul 1300 auf.

Das Leistungswinkelmodul 1300 ist dazu eingerichtet, in Abhängigkeit der erfassten Frequenzen, insbesondere der elektrischen Frequenz w_g des elektrischen Versorgungsnetzes und der elektrischen Frequenz w_m der virtuellen Synchronmaschine, eine Leistungswinkeländerung dδ/dt zu berechnen.

Die so berechnete Leistungswinkeländerung dδ/dt wird dann mittels der Multiplikation mit der Leistungsänderung dP/dt multipliziert, insbesondere um einen faktor PSC zu erhalten, der dasselbe Vorzeichen wie ein power synchronizing coefficent aufweist. Dieser Faktor kann auch als Änderung der Leistung nach dem Winkel, also dP/dδ beschrieben werden.

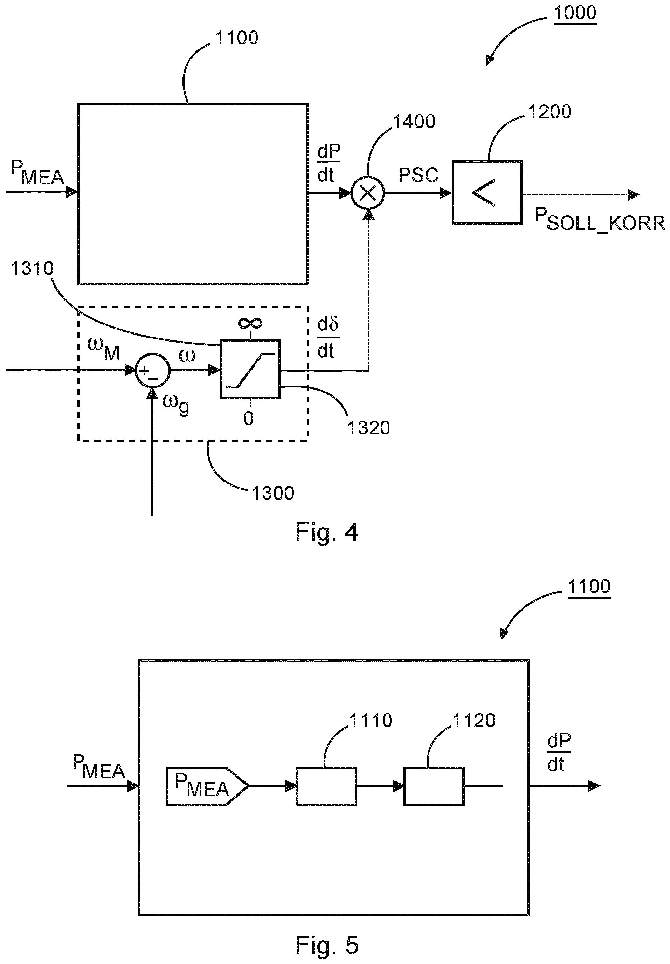

Fig. 4 zeigt ein Steuermodul 1000 eines Umrichters, insbesondere wie in Figur 3 gezeigt, in einer besonders bevorzugten Ausführungsform.

Das Leistungswinkelmodul 1300 weist dabei wenigstens eine Summation 1310 auf, die dazu eingerichtet ist, wenigstens eine erste elektrische Frequenz w_g mit einer zweiten elektrischen Frequenz w_m abzugleichen, insbesondere um eine Frequenzdifferenz (w) zu berechnen.

Bevorzugt ist die erste elektrische Frequenz dabei die elektrische Frequenz des elektrischen Versorgungsnetzes w_g und die zweite elektrische Frequenz die elektrische Frequenz der virtuellen Synchronmaschine w_m.

Zudem weist das Leistungswinkelmodul 1300 wenigstens einen Begrenzer 1320 auf, der dazu eingerichtet ist, die Frequenzdifferenz w auf positive Werte zu begrenzen. Bevorzugt arbeitet der Begrenzer also zwischen 0 und Unendlich.

Es wird also insbesondere auch vorgeschlagen nur positive Werte in Bezug auf die Leistungswinkeländerung dδ/dt zu betrachten.

Hierfür wird die Leistungswinkeländerung dδ/dt über einen Sättigungsblock 1320 geführt bzw. auf ausschließlich positive Werte begrenzt.

Sofern also negative Werte anliegen, wird durch den Begrenzer bzw. Sättigungsblock eine Null ausgegeben, die dazu führt, dass das Produkt aus Leistungswinkeländerung dδ/dt und Leistungsänderung dP/dt ebenfalls Null ist, wodurch der Grenzwert des Korrekturmoduls nicht überschritten wird und somit die Sollwerte P_soll nicht geändert werden, insbesondere, weil ein stabiler Betrieb vorliegt.

Es wird also insbesondere auch vorgeschlagen, dass nur die Situationen als kritischer Zustand identifiziert werden, wenn der Winkel δ beschleunigt und die Leistung P absinkt.

Fig. 5 zeigt ein Leistungsmodul 1100 eines Steuermoduls 1000, wie bspw. in den Figuren 2 bis 4 gezeigt, in einer bevorzugten Ausführungsform.

Das Leistungsmodul 1100 umfasst wenigstens eine diskrete Implementierung 1110 und eine diskrete Filterung 1120.

Das Leistungsmodul 1110 ist somit dazu eingerichtet, aus der erfassten Wirkleistung P_mea eine Ableitung der Leistung nach der Zeit zu berechnen, insbesondere eine Leistungsänderung dP/dt, die mittels der diskreten Filterung 1120 gefiltert wird.

Dies bedeutet insbesondere, dass das Leistungsmodul 1110 dazu eingerichtet ist, die Leistungsänderung dP/dt nach der Zeit zu bestimmen, insbesondere als Differential.

Zum Ermitteln dieser Leistungsänderung dP/dt wird insbesondere eine diskrete Implementierung 1110 der Ableitung der gemessenen Leistung P_mea vorgeschlagen, die mit einer zusätzlichen kaskadierten diskreten Filterung 1120 arbeitet.

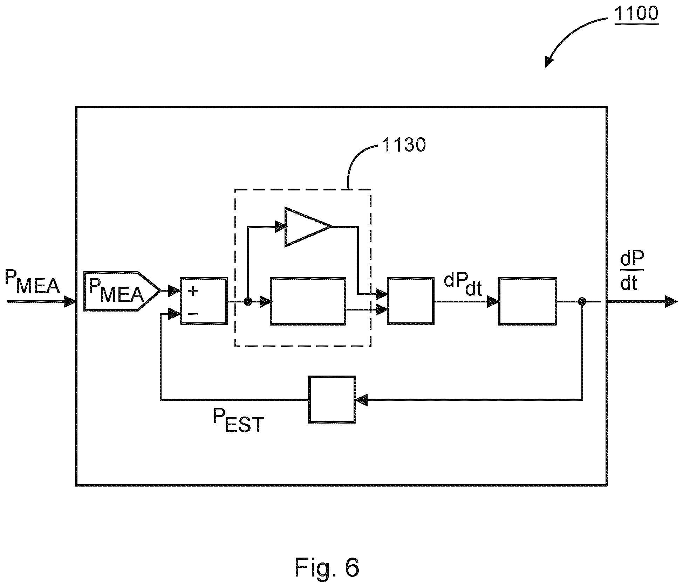

Fig. 6 zeigt ein Leistungsmodul 1100 eines Steuermoduls 1000, wie bspw. in den Figuren 2 bis 4 gezeigt, in einer weiteren, bevorzugten Ausführungsform.

Das Leistungsmodul 1100 umfasst wenigstens einen Beobachter 1130.

Der Beobachter kann bspw. durch einen PI-Regler ausgeführt sein, der auf eine Differenz zwischen der gemessenen Leistung P_mea und einer geschätzten Leistung P_est agiert, und dadurch eine Zustandsvariabel dP_{dt} berechnet.

Durch das Steuermodul ist es möglich, die Winkelinstabilität bei den virtuellen Synchronmaschinen zu vermeiden. Dies kann bspw. dadurch entstehen, wenn ein Fehler in einer Leitung auftritt und deshalb durch Abschaltung der betroffenen Leitung die äquivalente Impedanz zwischen Umrichter und Netz plötzlich erhöht wird. Das hat zufolge, dass aufgrund der physikalischen Grenze des Systems, die Sollwertleistung nicht mehr übertragen werden kann. Dies wiederum verursacht in einer virtuellen Synchronmaschine (wie übrigens in einer Synchronmaschine), dass die Synchronisierung mit dem Netz verloren geht. Durch das Steuermodul wird ein zusätzlicher Regler implementiert, der diesen kritischen Zustand anhand von verfügbaren Messgrößen erkennt und erlaubt passende Maßnahmen zu treffen, wie bspw. Anpassung des Leistungssollwertes.

### Bezuqszeichenliste

- 100: Windenergieanlage
- 200: Umrichter, insbesondere Leistungsumrichter einer Windenergieanlage
- 300: Steuereinheit einer virtuellen Synchronmaschine
- 310: Wirkleistungsregelung, insbesondere für den Umrichter
- 320: Blindleistungsregelung, insbesondere für den Umrichter
- 330: Recheneinheit, insbesondere der virtuellen Synchronmaschine
- 340: Stromregelung, insbesondere für den Umrichter
- 350: Sollwertvorgabe, insbesondere für den Umrichter
- 1000: Steuermodul
- 1100: Leistungsmodul
- 1110: diskrete Implementierung, insbesondere des Leistungsmoduls
- 1120: diskrete Filterung, insbesondere des Leistungsmoduls
- 1130: Beobachter, insbesondere des Leistungsmoduls
- 1200: Korrekturmodul
- 1300: Leistungswinkelmodul
- 1310: Summation
- 1320: Begrenzer
- 1400: Multiplikation
- e*: virtuelle Polradspannung
- fdm: frequency droop mechanism
- k: Verstärkung
- k_tresh: vorbestimmter Grenzwert
- P_est: geschätzte Wirkleistung
- P_mea: erfasste Wirkleistung
- P_soll: Leistungssollwert, insbesondere für die Windenergieanlage
- P_soll_korr: Korrekturwert für den Leistungssollwert, insbesondere für die Windenergieanlage
- P_set: Wirkleistungsollwertvorgabe, insbesondere für den Umrichter
- PSC: Faktor bzw. Produkt
- Q_set: Blindleistungsollwertvorgabe, insbesondere für den Umrichter
- Q_mea: erfasste Blindleistung
- S1: Schalter
- S*: Stromsollwerte, insbesondere für den Umrichter
- Set_1: erste weitere Sollwertvorgabe
- Set_2: zweite weitere Sollwertvorgabe
- T_e: Generatoristdrehmoment
- V_PCC: Spannungsollvorgabe, insbesondere für den Umrichter, am Umrichterausgang
- V_PCC_mea: am Umrichterausgang erfasste Spannung
- v_vir_e: virtuelle Erregerspannung, insbesondere virtual excitation voltage
- vdc: Spannungsregelung, insbesondere voltage droop control
- w_g: elektrische Frequenz des elektrischen Versorgungsnetzes
- w_m: elektrische Frequenz der virtuellen Synchronmaschine
- dP/dt: Leistungsänderung, insbesondere Leistungsänderung nach der Zeit
- dδ/dt: Leistungswinkeländerung, insbesondere Leistungswinkeländerung nach der Zeit

## Patentansprüche

1. Steuermodul (1000) eines Umrichters (200), insbesondere eines Leistungsumrichters einer Windenergieanlage (100), das dazu eingerichtet ist, den Umrichter (200) so anzusteuern, dass der Umrichter (200) ein Verhalten einer Synchronmaschine emuliert, wenigstens umfassend:
- ein Leistungsmodul (1100) zum Berechnen einer Leistungsänderung (dP/dt) in Abhängigkeit einer erfassten Leistung (P_mea) und
- ein Korrekturmodul (1200) zum Einstellen eines Leistungssollwertes (P_soll), insbesondere für den Umrichter, in Abhängigkeit der berechneten Leistungsänderung (dP/dt).

2. Steuermodul (1000) nach Anspruch 1, ferner umfassend:
- ein Leistungswinkelmodul (1300) zum Berechnen einer Leistungswinkeländerung (dδ/dt) in Abhängigkeit wenigstens einer erfassten Frequenz (w_m, w_g), wobei
- der Leistungssollwert (P_soll) auch in Abhängigkeit der Leistungswinkeländerung (dδ/dt) eingestellt wird.

3. Steuermodul (1000) nach Anspruch 2, ferner umfassend:
- eine Multiplikation (1400) mittels derer die Leistungsänderung (dP/dt) und die Leistungswinkeländerung (dδ/dt) zu einem Produkt (PSC) zusammengefasst werden, wobei
- der Leistungssollwert (P_soll) auch in Abhängigkeit des Faktors (PSC) eingestellt wird.

4. Steuermodul (1000) nach einem der vorstehenden Ansprüche, wobei das Leistungsmodul (1100)
- wenigstens eine diskrete Implementierung einer Ableitung der erfassten Leistung (P_mea) aufweist.

5. Steuermodul (1000) nach einem der vorstehenden Ansprüche, wobei das Leistungsmodul (1100)
- wenigstens eine diskrete Filterung aufweist, die der diskreten Implementierung der Ableitung der erfassten Leistung (P_mea) nachgelagert ist, um die die Leistungsänderung (dP/dt) zu ermitteln.

6. Steuermodul (1000) nach einem der vorstehenden Ansprüche, wobei das Leistungsmodul
- wenigstens einen Beobachter aufweist, insbesondere der die Leistungsänderung (dP/dt) ermittelt.

7. Steuermodul (1000) nach Anspruch 6, wobei der Beobachter
- durch einen PI-Regler auf eine Differenz zwischen der erfassten Leistung (P_mea) und einer, insbesondere durch den Beobachter, geschätzten Leistung (P_est) agiert.

8. Steuermodul (1000) nach einem der vorstehenden Ansprüche, wobei
- - das Leistungswinkelmodul (1300) wenigstens eine Summation (1310) aufweist, die dazu eingerichtet ist, wenigstens eine erste elektrische Frequenz (w_g) mit einer zweiten elektrischen Frequenz (w_m) abzugleichen, insbesondere um eine Frequenzdifferenz (w) zu berechnen.

9. Steuermodul (1000) nach Anspruch 8, wobei
- das Leistungswinkelmodul (1300) wenigstens einen Begrenzer (1320) aufweist, der dazu eingerichtet ist, die Frequenzdifferenz (w) auf positive Werte zu begrenzen.

10. Steuermodul (1000) nach einem der vorstehenden Ansprüche, wobei
- das Korrekturmodul (1200) dazu eingerichtet ist, den Leistungssollwert (P_soll) erst dann einzustellen, wenn ein vorbestimmter Grenzwert (k_tresh) überschritten ist, insbesondere, wenn der Faktor (PSC) den vorbestimmten Grenzwert (k_tresh) überschreitet.

11. Steuereinheit eines Umrichters, insbesondere eines Leistungsumrichters einer Windenergieanlage (100), umfassend ein Steuermodul nach einem der Ansprüche 1 bis 10.

12. Verfahren zum Steuern eines Umrichters, insbesondere eines Leistungsumrichters einer Windenergieanlage, wobei der Umrichter dazu eingerichtet ist, das Verhalten einer Synchronmaschine zu emulieren, umfassend die Schritte:
- Erfassen einer Leistung (P_mea) am Ausgang des Umrichters,
- Berechnen einer Leistungsänderung (dP/dt) in Abhängigkeit der erfassten Leistung (P_mea),
- Einstellen eines Leistungssollwertes (P_soll), insbesondere für den Umrichter, in Abhängigkeit der berechneten Leistungsänderun (dP/dt).

13. Verfahren zum Steuern eines Umrichters nach Anspruch 12, ferner umfassend den Schritt:
- Berechnen einer Leistungswinkeländerung (dδ/dt) in Abhängigkeit wenigstens einer erfassten Frequenz (w_m, w_g), wobei
- der Leistungssollwert (P_soll) auch in Abhängigkeit der Leistungswinkeländerung (dδ/dt) eingestellt wird.

14. Verfahren zum Steuern eines Umrichters nach Anspruch 12 oder 13, ferner umfassend den Schritt:
- Multiplizieren der Leistungsänderung (dP/dt) und der Leistungswinkeländerung (dδ/dt) zu einem Faktor PSC, insbesondere einem Faktor, der dasselbe Vorzeichen wie synchronizing power coefficient aufweist, wobei
- der Leistungssollwert (P_soll) auch in Abhängigkeit des Faktors (PSC) eingestellt wird.

15. Verfahren zum Steuern eines Umrichters nach einem der Ansprüche 12 bis 14, wobei
- die Leistungswinkeländerung (dδ/dt) wenigstens durch einen Abgleich einer mechanischen Frequenz (w_m) und einer elektrischen Frequenz (w_g) bestimmt wird.

16. Umrichter, insbesondere Leistungsumrichter einer Windenergieanlage, umfassend wenigstens eine Steuereinheit, insbesondere umfassend ein Steuermodul nach einem der Ansprüche 1 bis 10, wobei die Steuereinheit dazu eingerichtet ist, den Umrichter so anzusteuern, dass der Umrichter wenigstens ein Verhalten einer Synchronmaschine emuliert und/oder ein Verfahren nach einem der Ansprüche 12 bis 15 ausführt.

17. Umrichter nach Anspruch 16 ferner umfassend eine Steuereinheit einer virtuellen Synchronmaschine (300), insbesondere eine Steuereinheit nach Anspruch 11.

18. Windenergieanlage umfassend ein Steuermodul nach einem der Ansprüche 1 bis 10 und/oder eine Steuereinheit nach Anspruch 11 und/oder einen Umrichter nach Anspruch 16 oder 17 und/oder umfassend eine Steuereinheit eines Umrichters, die dazu eingerichtet ist, ein Verfahren nach einem der Schritte 12 bis 15 auszuführen.
